(19) Europäisches Patentamt
European Patent Office
Office européen des brevets

(11) EP 3 761 225 A1

(12) **EUROPÄISCHE PATENTANMELDUNG**

(43) Veröffentlichungstag:
06.01.2021 Patentblatt 2021/01

(51) Int Cl.:
*G06K 9/00* (2006.01)   *G06K 9/50* (2006.01)
*G06K 9/62* (2006.01)

(21) Anmeldenummer: 20179926.9

(22) Anmeldetag: 15.06.2020

(84) Benannte Vertragsstaaten:
**AL AT BE BG CH CY CZ DE DK EE ES FI FR GB
GR HR HU IE IS IT LI LT LU LV MC MK MT NL NO
PL PT RO RS SE SI SK SM TR**
Benannte Erstreckungsstaaten:
**BA ME**
Benannte Validierungsstaaten:
**KH MA MD TN**

(30) Priorität: **02.07.2019 DE 102019117849**

(71) Anmelder: **SICK AG**
**79183 Waldkirch (DE)**

(72) Erfinder:
• **Risch, Wolfgang**
**79224 Umkirch (DE)**
• **Merettig, Gerhard**
**79350 Sexau (DE)**
• **Köhl, Martin**
**79183 Waldkirch (DE)**
• **Kettel, Johannes**
**79211 Denzlingen (DE)**
• **Weisenberger, Fabian**
**79346 Endingen (DE)**
• **Lang, Felix**
**79418 Schliengen (DE)**
• **Edelmann, Georgy**
**79194 Gundelfingen (DE)**

(54) **ERFASSUNG EINES OBJEKTS IN EINEM ÜBERWACHUNGSBEREICH**

(57)    Es wird ein optoelektronischer Sensor (10) zur Erfassung eines Objekts (38) in einem Überwachungsbereich (18) angegeben, wobei der Sensor (10) einen Lichtsender (12) zum Erzeugen mehrerer Beleuchtungslinien (16a-c) in dem Überwachungsbereich (18), einen Lichtempfänger (24) zum Aufnehmen von Bilddaten der Beleuchtungslinien (16a-c) sowie eine Steuer- und Auswertungseinheit (26) aufweist, um aus den Bilddaten mindestens eine Kanteneigenschaft einer Kante (42) des Objekts (38) zu bestimmen. Dabei ist die Steuer- und Auswertungseinheit (26) dafür ausgebildet, die Kanteneigenschaft mit einer eingelernten Referenzkanteneigenschaft zu vergleichen und bei Übereinstimmung innerhalb eines Toleranzrahmens ein binäres Objektfeststellungssignal zu erzeugen, wobei der Sensor (10) ferner einen Schaltausgang (28) zur Ausgabe des Objektfeststellungssignals aufweist.

Figur 2

LS54-18

EP 3 761 225 A1

## EP 3 761 225 A1

**Beschreibung**

Die Erfindung betrifft einen optoelektronischen Sensor und ein Verfahren zur Erfassung eines Objekts in einem Überwachungsbereich nach dem Oberbegriff von Anspruch 1 beziehungsweise 15.

Eine typische Aufgabenstellung für einen optoelektronischen Sensor ist die Ausgabe eines Schaltsignals immer dann, wenn die Anwesenheit eines Objekts erkannt wird. Während bei einer einfachen Lichtschranke die bloße Anwesenheitsfeststellung genügt, besteht häufig die zusätzliche Anforderung, nur auf bestimmte Objekte oder bestimmte Objektlagen zu reagieren. Als mögliches Unterscheidungskriterium kommt eine charakteristische Kante in Betracht, deren zuverlässige Erkennung aber eine Herausforderung darstellt.

Grundsätzlich sind diverse 3D-Bilderfassungsverfahren zur Kantenerkennung bekannt. Dazu zählen Lichtschnittverfahren, Stereoskopie und Lichtlaufzeitverfahren. Bei einem Lichtschnittverfahren wird eine Lichtlinie oder ein Streifenmuster projiziert, und aus dessen Verzerrung durch die Objektstrukturen wird mittels Triangulation ein Höhenprofil oder Objektschnitt gewonnen. Da eine einzelne Linie in der Regel zu wenig Information liefert, sind entweder Kombinationen mehrerer solcher Sensoren mit entsprechend erhöhter Systemkomplexität oder eine Relativbewegung zwischen Sensor und Objekt erforderlich, um die einzelnen Höhenprofile zu einem Konturmodell zusammenzusetzen. Im bewegten Fall entsteht zusätzlicher Aufwand, um die Objektbewegung beispielsweise mit einem Encoder zu messen, und zudem kann durch Effekte wie Stau oder Schlupf eine Diskrepanz zwischen gemessener und tatsächlicher Objektbewegung auftreten

Die Stereoskopie ist an das menschliche räumliche Sehen angelehnt. Es werden zwei Bilder aus versetzter Perspektive aufgenommen, darin zueinander korrespondierende Merkmale gesucht, und deren Abstand oder Disparität wird in einen Entfernungswert umgerechnet. Um auch Objekte mit geringen natürlichen Kontrasten zu erfassen, kann ein strukturiertes Muster projiziert werden. Beispielsweise die Kinect-Kamera nutzt eine Spielart, die zwischen Lichtschnittverfahren und Stereoskopie anzusiedeln ist, in der das aufgenommene Muster mit dem in bestimmten Abständen erwarteten Muster korreliert wird.

Bei einem Lichtlaufzeitverfahren wird die Szenerie mit moduliertem Licht beleuchtet, je Pixel die Laufzeit zu einem Objektpunkt und zurück zur Kamera gemessen und dies über die Lichtgeschwindigkeit in Entfernungswerte umgerechnet.

Der Nachteil all dieser 3D-Bilderfassungen ist, dass bereits die 3D-Kameras als solche sehr teure Systeme sind. Trotzdem gibt es je nach Oberflächeneigenschaften der Objekte und daraus resultierender Signaldynamik Einschränkungen in Präzision und Detektionsfähigkeit. Zudem muss nachgelagert aus den 3D-Bilddaten mithilfe von Bildverarbeitungsmethoden die Objektoberfläche und deren interessierende Kante extrahiert werden. Das ist nochmals sehr rechenaufwändig. Dann erfordert die jeweilige flächige Beleuchtung eine hohe Leistung mit entsprechender Abwärme und Bauteilgröße, wodurch der Sensor in seiner Miniaturisierung begrenzt wird. Und schließlich ist eine häufige Anwendungssituation die Erfassung an einem Objektstrom mit Vorzugsrichtung der Bewegung, und von dieser Randbedingung machen die genannten 3D-Bilderfassungsverfahren keinen Gebrauch.

Ein anderer Ansatz ist, mehrere vergleichsweise einfache Sensoren zu einem System zu kombinieren. So gibt es Lichttaster, die punktuell erkennen, ob sich ein Objekt mit einem breiten Spektrum von Oberflächeneigenschaften vor einem bekannten Hintergrund befindet. Mit Hilfe des Triangulationsprinzips wird die Abstandsänderung eines Objektes in eine Ortsveränderung des Objektbilds auf einem optischen Detektor transformiert. Dies erlaubt eine Detektion mit dem Objektabstand als Unterscheidungskriterium.

Das entspricht aber letztlich nur einem einzigen Punkt einer 3D-Kamera. Um so eine Kante zu erkennen, ist für jeden Abtastpunkt der Kante ein weiterer Lichttaster erforderlich. Dazu sind Baugruppen aus mehreren Sensoren in einer definierten Geometrie zueinander anzuordnen. Zwar sind die einzelnen Sensoren kostengünstig, aber deren Ausrichtung und intelligente Verknüpfung ergibt dennoch eine teure Gesamtlösung durch Montage und gemeinsame Ansteuerung. Vor allem lässt sich das nur mit hohem individuellem Aufwand an eine konkrete Anwendung anpassen, und diese fehlende Flexibilität macht derartige Systemlösungen unpraktikabel. Selbst wenn der Aufwand in Kauf genommen wird, kann es punktuelle Störungen durch Fremdlichtquellen oder Objektreflexionen geben, die nicht in jeder Einbausituation zu vermeiden sind, und dann liefern zumindest einige Lichttaster schon grundsätzlich keine brauchbaren Informationen, was die Robustheit und Verlässlichkeit beeinträchtigt.

In gewisser Weise kann ein Lichtgitter als fertig integrierte Kombination einer Vielzahl von eindimensionalen Sensoren angesehen werden. Dabei handelt es sich aber jeweils nur um einfache Lichtschranken. Lichtgitter mit integrierter Abstandsmessung sind zwar auch denkbar, aber in der Praxis noch nicht eingesetzt. Das fixe Strahlraster erlaubt außerdem zu wenig Flexibilität, und eine Miniaturisierung ist kaum denkbar, da das Lichtgitter prinzipbedingt mindestens so groß bleiben muss wie die zu erfassenden Objektdimensionen.

Folglich gibt es bisher nur hochkomplexe 3D-Bilderfassungen und 3D-Bildverarbeitungen beziehungsweise Systemlösungen aus mehreren Sensoren, die teuer sind und nur mit großem manuellem Aufwand an bestimmte Anwendungssituationen angepasst werden können, oder am anderen Ende des Spektrums zu einfache Sensoren, die nicht ausreichend zwischen verschiedenen zu erfassenden Objekten differenzieren können.

Es ist daher Aufgabe der Erfindung, eine verlässlichere und differenziertere Objekterfassung zu ermöglichen.

Diese Aufgabe wird durch einen optoelektronischen Sensor und ein Verfahren zur Erfassung eines Objekts in einem Überwachungsbereich nach Anspruch 1 beziehungsweise 15 gelöst. Der Sensor projiziert mit einem Lichtsender mehrere Beleuchtungslinien in den Überwachungsbereich, die dort entsprechend der Objektstrukturen, auf die sie fallen, verzerrt werden. Ein Lichtempfänger, insbesondere ein Bildsensor mit einer Matrixanordnung von Empfangspixeln, nimmt Bilddaten des Überwachungsbereichs einschließlich zumindest eines Teils der Beleuchtungslinien auf. Aus diesen Bilddaten bestimmt eine Steuer- und Auswertungseinheit mindestens eine Kanteneigenschaft einer Kante des erfassten Objekts. Dafür wird die Verzerrung der Beleuchtungslinien durch die Kante ausgenutzt.

Die Erfindung geht von dem Grundgedanken aus, die Kanteneigenschaft, damit die Kante und letztlich das Objekt, durch Vergleich mit einer eingelernten Referenzkanteneigenschaft wiederzuerkennen. Je nachdem, ob Kanteneigenschaft und Referenzkanteneigenschaft innerhalb eines Toleranzrahmens übereinstimmen, wird ein binäres Objektfeststellungssignal an einem Schaltausgang ausgegeben, etwa EIN, wenn das Objekt wiedererkannt ist, sonst AUS, oder entsprechend invertierte Schaltzustände. Dabei kann die Toleranz eine Eigenschaft der Kante selbst betreffen, also einen Sprung im Höhenprofil der Kante, eine laterale Geometrieeigenschaft wie deren Krümmung oder Geradheit. Alternativ oder zusätzlich wird die Position der Kante in Translation beziehungsweise Rotation bewertet.

Die Erfindung hat den Vorteil, dass durch die mehreren Beleuchtungslinien entsprechende Höhenprofile oder Objektschnitte gewonnen werden, aus denen deutlich mehr Kanteneigenschaften erfassbar sind als mit einer einfachen punktförmigen Beleuchtung, die lediglich einen einzigen Abstandswert als Merkmal liefert. Die Auswertung über eine Beleuchtungslinie statt nur einen Beleuchtungspunkt führt auch zu Verbesserungen in der Robustheit bei Objekten mit für einfache Lichttaster schwierigen Oberflächeneigenschaften wie Glanz und dergleichen. Redundanz durch Verwendung zusätzlicher Beleuchtungslinien kann bei geeigneter Algorithmik sogar ausgedehnte Störungen kompensieren.

Erdfindungsgemäß ist nicht nur das differenzierte Wiedererkennen einer bestimmten Kante, sondern auch die Detektion von deren Position und Orientierung möglich. Solche Aufgabenstellungen sind im Stand der Technik nur mit aufwändigen Bildverarbeitungssystemen oder Systemlösungen aus mehreren Sensoren zu bewältigen, für die neben dem hohen Preis auch Expertenwissen für deren Einrichtung und Anpassung erforderlich ist. Der erfindungsgemäße Sensor dagegen ist vergleichbar kostengünstig und einfach zu handhaben wie ein herkömmlicher Lichttaster, leistet dann aber wesentlich mehr und schwierigere Detektionsaufgaben.

Der Lichtsender ist bevorzugt zum Erzeugen von zwei oder drei Beleuchtungslinien ausgebildet, die insbesondere parallel zueinander verlaufen. Der Lichtempfänger nimmt entsprechend die zwei oder drei Beleuchtungslinien über zumindest einen Teil ihres Verlaufs auf. Die Beleuchtungslinien verlaufen vorzugsweise parallel zueinander, wobei sich diese Betrachtung auf eine ebene Objektfläche bezieht, denn Strukturen im Überwachungsbereich können natürlich den parallelen Verlauf stören. Prinzipiell sind auch mehr als drei Beleuchtungslinien vorstellbar, aber es sollen auch dann wenige Beleuchtungslinien mit einem Abstand zueinander sein, der um Faktoren größer ist als die Dicke der Beleuchtungslinie, beispielsweise höchstens fünf oder höchstens zehn Beleuchtungslinien. Es handelt sich also in keinem Fall um ein flächenfüllendes Streifenmuster. Das Ziel ist nicht die Erfassung einer vollständigen dreidimensionalen Objektkontur wie bei einem Streifenprojektionsverfahren, sondern das robuste Erfassen einer Objektkante mit möglichst wenig Aufwand. Das Erkennen einer Kante erfolgt auch nicht erst verzögert, nachdem sukzessive eine dreidimensionale Objektkontur im Laufe einer Relativbewegung zwischen Sensor und Objekt zusammengesetzt wurde, sondern vorzugsweise schon jeweils nach einer einzigen Bildaufnahme (Snapshot).

Die Steuer- und Auswertungseinheit ist bevorzugt dafür ausgebildet, die Bilddaten mit einem Triangulationsverfahren auszuwerten. Die Verzerrungen der Beleuchtungslinien durch Objektstrukturen führen zu einer der jeweiligen Höhe entsprechenden Ablage auf dem Lichtempfänger, die nach dem Triangulationsprinzip in eine Entfernung umgerechnet werden kann. Es wird also je Beleuchtungslinie ein Höhenprofil auf dem Objekt gewonnen.

Der Sensor weist bevorzugt ein erstes Bedienelement zum Auslösen eines Einlernmodus' aufweist, wobei die Steuer- und Auswertungseinheit dafür ausgebildet ist, in dem Einlernmodus die Referenzkanteneigenschaften des dann im Überwachungsbereich befindlichen Objekts anhand der Bilddaten der Beleuchtungslinien einzulernen. Das erste Bedienelement, das beispielsweise als Teachknopf ausgebildet ist, ermöglicht somit eine ganz einfache Handhabung des Sensors, die keinerlei Fachkenntnisse erfordert. Das später wiederzuerkennende Objekt wird im Überwachungsbereich positioniert, in der Lage, in der es im Betrieb ein Schaltsignal auslösen soll. Durch Betätigen des ersten Bedienelements werden die Beleuchtungslinien projiziert, Bilddaten davon erzeugt und daraus die Kantenreferenzeigenschaften gewonnen. Der Sensor ist damit betriebsbereit. Es ist denkbar, nacheinander mehrere Objekte und/oder mehrere Positionen beziehungsweise Orientierungen einzulernen. Sie lösen dann in einer Ausführungsform jeweils das Schaltsignal aus. Der Sensor zeigt damit an, dass eine der Einlernsituationen wiedererkannt ist, ohne dazwischen zu unterscheiden. Für eine Unterscheidung könnten in einer anderen Ausführungsform mehrere Schaltausgänge vorgesehen sein, oder das Schaltsignal lässt durch ein Protokoll etwa anhand von unterschiedlichen Pulslängen mehrere Zustände unterscheiden.

Der Sensor weist bevorzugt ein zweites Bedienelement zum Einstellen des Toleranzrahmens auf. So lässt sich einstellen, wie genau ein eingelerntes Objekt beziehungsweise eine eingelernte Objektlage zum Wiedererkennen reprodoziert sein muss. Das zweite Bedienelement ist vorzugsweise einfach, insbesondere mit dem ersten Bedienelement gemeinsam ausgebildet. Beispielsweise ist ein Teachknopf mit einer Wippe oder als Drehknopf gestaltet. Ein einfaches oder langes Drücken löst das Einlernen aus, ein Betätigen der Wippe oder ein Drehen vergrößert oder verkleinert den Toleranzrahmen. Mit dem zweiten Bedienelement wird vorzugsweise nur eine skalare, zusammenfassende Empfindlichkeit eingestellt, eine Art Gesamtvolumen im Merkmalsraum, in dem Kanteneigenschaften und Referenzkanteneigenschaften vergleichen werden. Über mehrere Bedienelemente oder Eingabemuster, vorzugsweise dann aber eine eigene Schnittstelle zu einer Bediensoftware, ist auch eine Parametrierung im Einzelnen vorstellbar, also beispielsweise wird dann für die Geradheit einer Kante eine hohe Genauigkeit gefordert, während die Orientierung stärker abweichen darf.

Die Kanteneigenschaft weist bevorzugt einen Verlauf der Kante in Höhenrichtung und/oder lateraler Richtung auf. Das sind Merkmale, die sich auf die Kante selbst beziehen, mit denen also erkannt wird, ob es die eingelernte Kante ist. Daran wird erkannt, ob das erfasste Objekt dem eingelernten Objekt entspricht. Später werden ergänzend oder alternativ Kanteneigenschaften angeführt, mit denen die Lage beziehungsweise Orientierung beurteilt wird. Es ist denkbar, dass nur bestimmte Lagen und Orientierungen akzeptiert werden, aber auch, dass die Kante gänzlich unabhängig von ihrer Lage in den bis zu sechs Freiheitsgraden wiedererkannt wird.

Die Kanteneigenschaft weist bevorzugt einen Höhensprung und/oder ein Kriterium zur Beurteilung der Krümmung der Kante auf. Beispielsweise soll die Kante einen der Objektdicke entsprechenden Höhensprung aufweisen, oder sie soll gerade oder kreisbogenförmig sein. Dabei kann die vereinfachende Randbedingung unterstellt werden, dass nur eine Kante erfasst ist, was sich durch die Dimensionierung der Beleuchtungslinien und des Objekts sowie der Abstände und Anordnungen sicherstellen lässt.

Der Lichtsender erzeugt vorzugsweise mehr Beleuchtungslinien als zur Rekonstruktion der Kanteneigenschaft erforderlich sind, wobei die Steuer- und Auswertungseinheit die mindestens eine zusätzliche Beleuchtungslinie für eine fehlertolerante Rekonstruktion nutzt. Beispielsweise würden für die Rekonstruktion einer geraden Kante zwei Beleuchtungslinien ausreichen. Durch mindestens eine weitere Beleuchtungslinie ist damit die Rekonstruktion überbestimmt, und das ermöglicht eine tolerante und damit insgesamt robustere Rekonstruktion, etwa wenn eine Beleuchtungslinie durch Effekte wie Übersteuerung oder Totalreflexion einen Ausreißer erzeugt.

Die Kanteneigenschaft weist bevorzugt eine Position und/oder Orientierung der Kante auf. Hier wird nun nicht die Kante selbst erkannt, obwohl das vorzugsweise auch der Fall und häufig sogar Voraussetzung ist, sondern deren Lage in bis zu sechs Freiheitsgraden der Translation und Rotation. Ein Objekt wird also nur in der richtigen Lage wiedererkannt. Das richtige Objekt in der falschen Lage würde hier nicht zu einer Anwesenheitsfeststellung am Schaltausgang führen. Letztlich muss der Sensor vorzugsweise gar nicht unterscheiden, ob die Kantenreferenzeigenschaften sich auf die Kante selbst oder auf deren Lage beziehen. Der Sensor entscheidet schlicht, ob die Einlernsituation im Rahmen der Toleranzen erneut vorliegt.

Der Sensor ist vorzugsweise an einem Förderer montiert, der das Objekt in einer Bewegungsrichtung an dem Sensor vorbeibewegt. Das ist eine besonders wichtige und häufige Anwendungssituation. Bewertet wird dann beispielsweise die Vorderkante des Objekts in Bewegungsrichtung. Es ist auch denkbar, zwei oder mehr unterschiedliche Situationen während der Förderbewegung zu beurteilen, aber vorzugsweise kommt der Sensor mit einer einzigen Erfassung in einer in diesem Moment festen Objektposition aus. Ohnehin ist der Sensor auch voll funktionsfähig, wenn es keine Relativbewegung zwischen Sensor und Objekt gibt, es lassen sich lediglich einige vorteilhafte Ausführungsformen angeben, wenn eine Relativbewegung in einer bestimmten Bewegungsrichtung vorausgesetzt werden kann.

Die Kanteneigenschaft weist bevorzugt eine Position der Kante in Bewegungsrichtung und/oder einen Winkel der Kante zu der Bewegungsrichtung auf. Wenn also die Randbewegung einer Relativbewegung in einer bekannten Bewegungsrichtung gegeben ist, so wird die Lage der Kante vorzugsweise bezüglich der Bewegungsrichtung bewertet.

Die Steuer- und Auswertungseinheit ist bevorzugt dafür ausgebildet, den Vergleich der Kanteneigenschaft mit der Referenzeigenschaft auf einen Auslöser hin vorzunehmen. Diese getriggerte Betriebsart ist besonders bei Montage an einem Förderer geeignet.

Beispielsweise erkennt eine vorgelagerte Lichtschranke, dass ein Objekt in den Überwachungsbereich eintritt, und dies löst gegebenenfalls mit einer dem erwarteten Vorschub entsprechenden Verzögerung die Erfassung durch den Sensor aus. Prinzipiell könnte sich aber der Sensor auch selbst triggern, indem beispielsweise die erste Verzerrung einer Beleuchtungslinie als Anwesenheitserkennung genutzt wird, die dann wie eine Lichtschranke eine nachfolgende eigentliche Kanten- und damit Objekterkennung auslöst. Alternativ zu einem getriggerten Betrieb ist auch ein zyklischer Betrieb möglich, insbesondere mit der maximalen Geschwindigkeit der Aufnahmefrequenz des Lichtempfängers.

Dem Lichtsender ist vorzugsweise ein Mustererzeugungselement vorgeordnet. Dabei kann es sich um eine Zylinderlinse auch als Mikrolinsenanordnung, ein diffraktives optisches Element oder ein sonst geeignetes optisches Element handeln, mit dem das Licht der eigentlichen Lichtquelle zu einer oder mehreren Lichtlinien aufgezogen wird. Es sind praktisch alle Ausführungsformen zwischen den beiden Extremen denkbar, in denen je Beleuchtungslinie eine Lichtquelle und ein Mustererzeugungselement vorhanden ist oder eine einzige Lichtquelle mit einem gemeinsamen Mustererzeugungselement alle Beleuchtungslinien erzeugt.

Der Sensor weist bevorzugt eine Schnittstelle zur Ausgabe der Kanteneigenschaft auf. Damit wird nicht nur das Objektsfeststellungssignal am Schaltausgang bereitgestellt, sondern es wird auch die Zusatzinformation ausgegeben, welche Kanteneigenschaft erfasst und damit dem Schaltsignal zugrunde gelegt wurde. Das ist insbesondere zu Diagnosezwecken nützlich.

Der Sensor weist bevorzugt eine Schnittstelle zur Ausgabe von Bilddaten auf. Damit werden zusätzlich Rohbilder der aufgenommenen Beleuchtungslinien zur Verfügung gestellt, oder es werden zur Nachvollziehbarkeit Bilder ohne die Beleuchtungslinien aufgenommen und ausgegeben, dann vorzugsweise unter flächiger Beleuchtung.

Das erfindungsgemäße Verfahren kann auf ähnliche Weise weitergebildet werden und zeigt dabei ähnliche Vorteile. Derartige vorteilhafte Merkmale sind beispielhaft, aber nicht abschließend in den sich an die unabhängigen Ansprüche anschließenden Unteransprüchen beschrieben.

Die Erfindung wird nachstehend auch hinsichtlich weiterer Merkmale und Vorteile beispielhaft anhand von Ausführungsformen und unter Bezug auf die beigefügte Zeichnung näher erläutert. Die Abbildungen der Zeichnung zeigen in:

Fig. 1     eine Blockdarstellung eines optoelektronischen Sensors mit mehreren Beleuchtungsl inien;

Fig. 2     eine dreidimensionale Darstellung des Sensors über einem Objekt mit Darstellung der durch das Objekt verzerrten Beleuchtungslinien;

Fig. 3     eine beispielhafte Darstellung der von dem Sensor in der Situation der Figur 2 aufgenommenen Bilddaten;

Fig. 4a     eine Darstellung des Merkmalsraums zur Erfassung einer Kante für den Beispielfall einer geraden, durch Steigung m und Ablage b beschriebenen Kante, sowie eines Toleranzrahmens zur Wiedererkennung;

Fig. 4b     eine Darstellung ähnlich Figur 4a nun mit geringerem Toleranzrahmen speziell für die Ablage b;

Fig. 5a     eine Darstellung einer tatsächlichen Kante, der Messdaten und der daraus rekonstruierten Kante im Falle eines Ausreißers in den Messdaten zur II-lustration des Fehlers bei einfacher Rekonstruktion; und

Fig. 5b     eine Darstellung ähnlich Figur 5a, nun jedoch mit verbesserter fehlertoleranter Rekonstruktion;

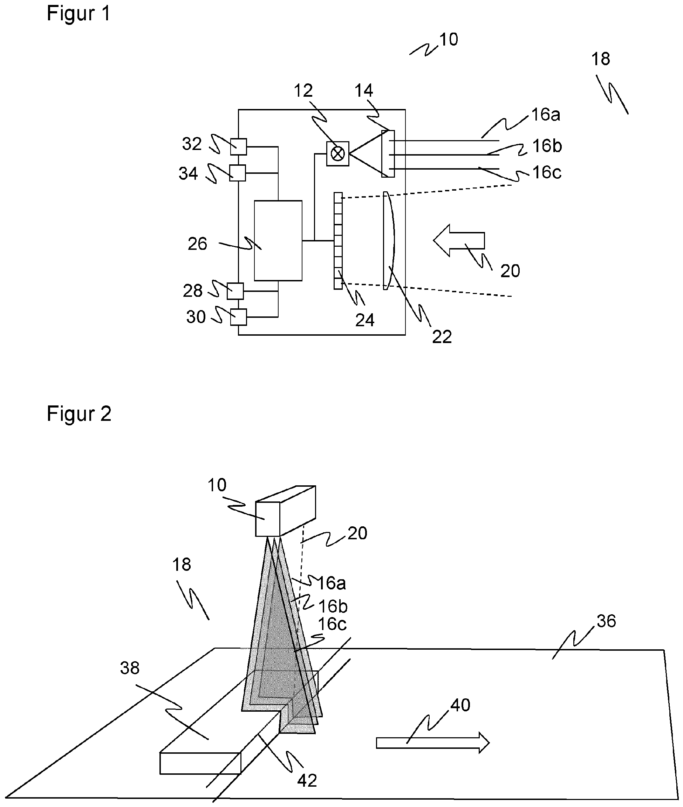

Figur 1 zeigt eine schematische Blockdarstellung eines optoelektronischen Sensors 10. Ein Lichtsender 12 erzeugt mit Hilfe eines Mustererzeugungselements 14 mehrere Beleuchtungslinien 16a-c in einem Überwachungsbereich 18. Eine nicht gezeigte strahlformende Optik kann hinzukommen oder mit dem Mustererzeugungselement 14 kombiniert werden. Im gezeigten Ausführungsbeispiel sind es drei Beleuchtungslinien 16a-c, es sind auch nur zwei Beleuchtungslinien oder einige zusätzliche Beleuchtungslinien denkbar, aber nicht so viele, dass aus den einigen vereinzelten Beleuchtungslinien ein flächiges Streifenmuster würde. Zusätzliche Beleuchtungslinien sorgen für mehr Robustheit durch Redundanz. Mit mindestens drei Beleuchtungslinien lässt sich auch eine nicht gerade verlaufende Kante erkennen.

In der dargestellten Konfiguration erzeugt eine einzige Lichtquelle des Lichtsenders 12 über ein gemeinsames Mustererzeugungselement 14 alle drei Beleuchtungslinien 16a-c. In anderen Ausführungsformen gibt es mehrere Lichtquellen und/der mehrere Mustererzeugungselement, so dass also allgemein i=1..n Lichtquellen mit j=1..n Mustererzeugungselement die hier n=3 Beleuchtungslinien erzeugen. Die Beleuchtungslinien 16a-c können eine unterschiedliche Helligkeit über ihren Verlauf aufweisen und auch unterbrochen sein, also eine Art gepunktete, gestrichelte oder sonstwie strukturierte Linie bilden, aber vorzugsweise sind es durchgehende, gleichmäßige Linien. Als Lichtquellen eigenen sich LEDs oder Laserlichtquellen beispielsweise mit einer Wellenlänge von 635 mm, wobei andere Wellenlängen denkbar sind, insbesondere unterschiedliche oder umschaltbare Wellenlängen je Beleuchtungslinie 16a-c zur Anpassung an ein zu detektierendes Objekt.

Das aus dem Überwachungsbereich 18 kommende Empfangslicht 20 wird über eine Empfangsoptik 22 mit einem ortsaufgelösten Lichtempfänger 24 aufgenommen, insbesondere einem Bildsensor mit einer Matrixanordnung von lichtempfindlichen Pixeln. Ein nicht gezeigtes schmalbandiges, auf den Lichtsender 12 abgestimmtes optisches Bandpassfilter im Empfangspfad erhöht die Robustheit gegen Störungen durch Fremdlicht. Der Lichtempfänger 24 erzeugt Bilddaten der in den Überwachungsbereich 18 projizierten Beleuchtungslinien 16a-c, die dort durch Objektstrukturen verzerrt werden.

Die Bilddaten werden in einer Steuer- und Auswertungseinheit 26 in einer noch zu beschreibenden Weise ausgewertet. Die Steuer- und Auswertungseinheit 26 steuert auch die Erzeugung der Beleuchtungslinien 16a-c. In einer bevorzugten Ausführungsform werden die Beleuchtungslinien 16a-c unabhängig voneinander angesteuert, so dass sie in einem ersten Schritt unabhängig voneinander ausgewertet werden können, dann aber in einem weiteren Schritt eine gemeinsame Bewertung erfolgt.

Die Hauptaufgabe der Auswertung ist, ein Objekt im Überwachungsbereich 18 anhand von Kanteneigenschaften wiederzuerkennen. Dementsprechend wird ein binäres Schaltsignal auf einem Schaltausgang 28 gesetzt, je nachdem, ob die Anwesenheit des wiederzuerkennenden Objekts festgestellt wird oder nicht. Es kann mindestens eine weitere Ausgabeschnittstelle 30 geben, um etwa für Diagnosezwecke zusätzlich die Kanteneigenschaften oder beispielsweise auch die Bilddaten auszugeben. Um dafür realistische Bilder des Überwachungsbereichs zu erhalten, könnte optional eine separat schaltbare flächige Beleuchtung vorgesehen sein.

Der Sensor 10 weist einen Teachknopf 32 auf, um einen ebenfalls noch zu beschreibenden Einlernmodus auszulösen. In diesem Einlernmodus werden Referenzkanteneigenschaften des im Betrieb wiederzuerkennenden Objekts eingelernt und gespeichert. Ein weiteres Bedienelement 34 ist denkbar, um beispielsweise die Empfindlichkeit der Wiedererkennung von Objekten einzustellen. Das weitere Bedienelement 34 ist vorzugsweise entgegen der Darstellung gemeinsam mit dem Teachknopf 32 ausgebildet, der beispielsweise als Wippe oder Drehknopf ausgestaltet ist und so verschiedene Betätigungen ermöglicht. Denkbar ist auch ein nicht gezeigter Anschluss für ein Konfigurationsgerät, mit dem der Sensor 10 beispielsweise über eine grafische Bedienoberfläche eingestellt wird beziehungsweise Erfassungsdaten ausgibt.

Figur 2 zeigt eine dreidimensionale Darstellung der Montage des Sensors 10 über einem Förderband 36, das ein zu erfassendes Objekt 38 in einer Förderrichtung 40 transportiert. Ein beispielhafter Arbeitsabstand beträgt 150 mm bei Detektion von Objekten 38 ab 5 mm und bis 50 mm Höhe. Diese Kenngrößen können aber durch Variation der Sensorgeometrie und des Lichtempfängers 24 in einer großen Bandbreite variieren. Der Sensor 10 funktioniert auch ohne Relativbewegung des Objekts 38 wie auf einem Förderband 36. Beispielsweise könnten die Beleuchtungslinien 16a-c so angeordnet werden, dass sie eine freie Seite eines Stapels überdecken. Damit wird überwacht, ob sich beim Abstapeln die oberste Lage des Stapels verschiebt.

Der Sensor 10 ist hier nur ganz schematisch gezeigt. Dargestellt sind aber die einzelnen Beleuchtungslinien 16a-c, die sich im Raum als Lichtfächer ausbreiten und auf dem Objekt 38 eine jeweilige Konturlinie entsprechend der darunterliegenden Objektstrukturen erzeugen. Damit wird hier die in Förderrichtung 40 führende oder vordere Kante 42 des Objekts 38 erfasst. Aus dem hier nur durch eine Hauptrichtung gezeigten Empfangslicht 20 erzeugt der Lichtempfänger 24 Bilddaten der verzerrten Beleuchtungslinien 16a-c, aus denen mittels Triangulation ein Höhenprofil der Kante 42 bestimmt werden kann.

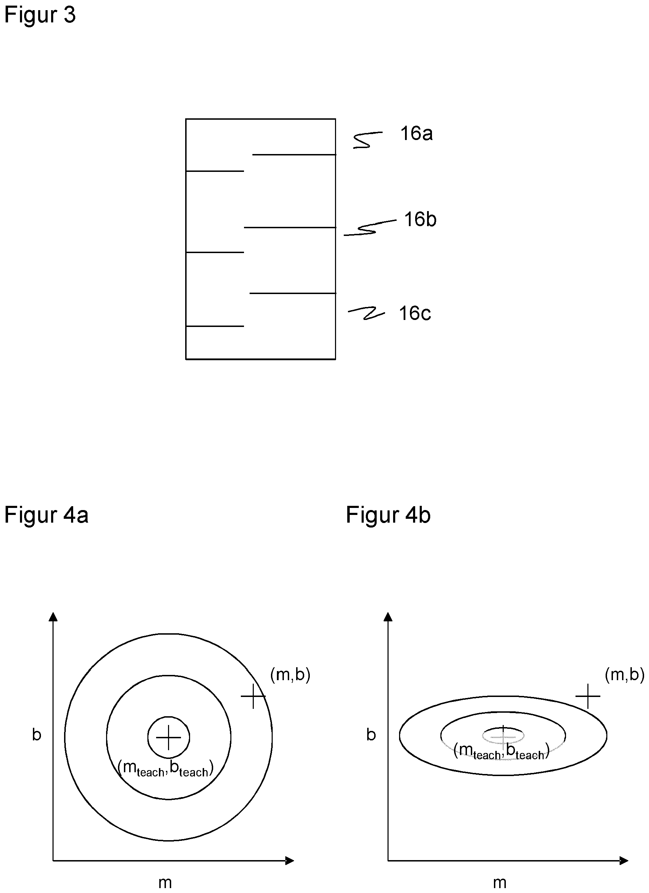

Ein solches Bild der Beleuchtungslinien 16a-c auf der Kante 42 ist beispielhaft in Figur 3 gezeigt. Es werden drei parallele Beleuchtungslinien 16a-c in den Überwachungsbereich 18 projiziert. Abweichend von der Darstellung ist auch ein nicht paralleler Verlauf der Beleuchtungslinien 16a-c möglich. Da die Triangulationsgeometrie für jede Beleuchtungslinie 16a-c unterschiedlich ist, wurden die hier Abstände zwischen den Beleuchtungslinien 16a-c so optimiert, dass sie sich auch für Objekte 38 mit maximaler Höhe ohne Überlappung abbilden lassen. Es ergeben sich aufgrund der parallelen Beleuchtungslinien 16a-c unterschiedliche große Auswertebereiche für jede Beleuchtungslinie 16a-c. Die scheinbar unterschiedlichen Höhensprünge in Figur 3 sind ein Artefakt dieser unterschiedlich großen Auswertebereiche, aber dieser Effekt kann natürlich herausgerechnet werden. Neben den Abweichungen in den Auswertebereichen kann sich auch eine ungleichmäßige Intensität der Beleuchtungslinien 16a-c ergeben. Das lässt sich durch eine Regelung ausgleichen, um den Dynamikbereich des Lichtempfängers 24 besser auszunutzen.

Die Auswertung zielt auf die Ermittlung von Kanteneigenschaften oder Kantenparametern. Dabei können anhand der Höhenprofile typische Sensorartefakte wie Reflexionen, Störlicht oder punktuell fehlende Remission kompensiert werden. Als Kanteneigenschaften oder Merkmale kommen Eigenschaften der Kante selbst sowie von deren Lage in bis zu sechs Freiheitsgraden der Translation und Rotation in Betracht. In der auch sehr praxisrelevanten Situation der Figur 3, in der eine einzige gerade Kante wiedererkannt werden soll, sind typische Kantenparameter die Höhe des Sprungs an der Kante, aber auch die Höhe selbst des Objekts vor und hinter der Kante, sowie die Geradheit im Bereich vor und nach der Kante. Die Lage lässt sich hier gut durch die Position in Bewegungsrichtung und den Winkel zu der Bewegungsrichtung beschreiben, so dass die im allgemeinen sechs Freiheitsgrade der Lage auf nur zwei Freiheitsgrade reduziert werden können.

Solche erfassten Kanteneigenschaften können über die weitere Ausgabeschnittstelle 30 ausgegeben werden. Die Kernfunktion besteht allerdings im Vergleich der aktuellen Kanteneigenschaften mit eingelernten Referenzkanteneigenschaften. Bei Übereinstimmung im Rahmen von vorgegebenen oder eingestellten Toleranzen gilt das Objekt 38 als wiedererkannt.

Zum Einlernen wird ein einzulernendes Objekt 38 in der gewünschten Lage im Überwachungsbereich 18 angeordnet und der Teachknopf 32 betätigt. Der Lichtempfänger 24 nimmt die entsprechend verzerrten Beleuchtungslinien 16a-c auf, und die Steuer- und Auswertungseinheit 26 bestimmt die Kanteneigenschaften, die als Referenzeigenschaften für den späteren Betrieb abgespeichert werden.

Dieses Einlernen zielt nicht darauf, den Sensor 10 zu kalibrieren. Entsprechend können auch die ermittelten Kanteneigenschaften nicht im Sinne eines messenden Systems geliefert werden. Es handelt sich vielmehr um unbekannt skalierte und verzerrte Größen, die aber für eine konkrete Einbausituation die benötigte Wiederholbarkeit aufweisen: Der Sensor 10 stellt anschaulich gesprochen fest, ob die eingelernte Situation erneut vorliegt, ohne diese Situation als solche zu vermessen oder zu beurteilen. Dabei sind auch Variationen der Einbausituation in weitem Umfang möglich, die nicht durch Kalibration kompensiert, sondern durch erneutes Einlernen berücksichtigt werden. Alternativ wäre eine Ausführung als messendes System auch vorstellbar. Dazu müsste der Sensor 10 aber beispielsweise mittels eines entsprechenden Kalibrationsmusters kalibriert werden. Das erfordert dann wieder Engineering-Aufwand, der vorzugsweise gerade vermieden werden soll.

Im Ergebnis entsteht ein Kantentaster durch mehrfache Linienabtastung, der sich in der Handhabung nicht von einem herkömmlichen eindimensionalen Lichttaster unterscheidet, aber in der Differenzierung von Objektes und Objektlagen ungleich mächtiger ist.

Die wesentliche Anpassungsmöglichkeit für den Anwender an eine bestimmte Detektionsaufgabe besteht in dem soeben beschriebenen Einlernen. Daneben kann die Empfindlichkeit global oder auch für jede Kanteneigenschaft separat eingestellt werden. Eine einfache globale Einstellmöglichkeit bietet das weitere Bedienelement 34. Über eine Kommunikationsschnittstelle oder mehrere Bedienelemente ist auch eine selektive Einstellung für einzelne Kanteneigenschaften denkbar.

Die globale und individuelle Einstellbarkeit der Empfindlichkeit wird in den Figuren 4a-b illustriert. In diesem Beispiel wird eine gerade Kante durch die beiden Kanteneigenschaften Steigung m und Ablage b einer Geraden beschrieben, die auf der X-Achse und Y-Achse aufgetragen sind. Beim Einlernen wurden die zentral gezeigten Referenzkanteneigenschaften ($m_{teach}$, $b_{teach}$) erfasst.

Die Kreise in Figur 4a zeigen unterschiedliche Toleranzrahmen, in denen aktuell erfasste Kanteneigenschaften (m,b) noch als hinreichend mit den Referenzkanteneigenschaften ($m_{teach}$, $b_{teach}$) übereinstimmend angesehen werden sollen. Der Radius der Kreise kann verkleinert oder vergrößert werden. Das ist ein Beispiel für eine globale Einstellung der Empfindlichkeit, denn der Toleranzrahmen wird für die Steigung m und die Ablage b zugleich verändert.

In Figur 4b dagegen sind die Kreise zu Ellipsen verzerrt. Hier wurde also spezifisch oder individuell nur für die Ablage b der Toleranzrahmen enger gesetzt. Deshalb reichen auch dieselben beispielhaft gezeigten Kanteneigenschaften (m,b) nun nicht mehr für ein Wiedererkennen aus, sie liegen jetzt außerhalb der Toleranz.

Es ist übrigens auch denkbar, die Kanteneigenschaften mehrfach mit unterschiedlichen Toleranzrahmen oder Schwellen zu bewerten. Der rechenintensive Schritt ist die Ermittlung der Kanteneigenschaften, ein mehrfacher Vergleich erfordert keinen nennenswerten Zusatzaufwand. Damit können dann Kanten auch klassifiziert werden, als mögliche Erweiterung der reinen Detektionsaufgabe.

In den bisherigen Beispielen wurden jeweils drei Beleuchtungslinien 16a-c erzeugt. Damit kann die Kante 42 an drei Stellen abgetastet werden. Das genügt für die Detektion aller Kanten, die sich mit drei Parametern beschreiben lassen, also insbesondere für gerade Kanten, bei denen die beiden Parameter Steigung m und Ablage b genügen, aber auch kreisrunde Kanten mit Mittelpunkt und Radius.

Es ist aber durchaus vorteilhaft, mehr Beleuchtungslinien 16a-c zu erzeugen und auszuwerten als die minimal erforderliche Anzahl. Die redundante Information lässt sich nutzen, um zu erkennen, dass tatsächlich eine komplette Kante und nicht beispielsweise die Ecke des Objekts 38 erfasst wurde.

Außerdem ist mit zusätzlichen Beleuchtungslinien 16a-c eine Fehlerkompensation möglich, insbesondere eine Beseitigung von Ausreißern. Dazu soll weiterhin das Beispiel einer geraden Kante herangezogen werden. Dabei müssen aus der Geradengleichung

$$y = m * x + b$$

die beiden Parameter m und b bestimmt werden. Bei n Beleuchtungslinien ergibt sich das Gleichungssystem

$$\begin{aligned} y_1 &= m * x_1 + b \\ y_2 &= m * x_2 + b \\ &\vdots \\ y_n &= m * x_n + b \end{aligned}$$

oder in Vektorschreibweise

$$\begin{bmatrix} y_1 \\ y_2 \\ \vdots \\ y_n \end{bmatrix} = \begin{bmatrix} x_1 & 1 \\ x_2 & 1 \\ \vdots & \vdots \\ x_n & 1 \end{bmatrix} * \begin{bmatrix} m \\ b \end{bmatrix}.$$

Es lässt sich hier ein Least-Square-Verfahren anwenden:

$$\begin{bmatrix} \widehat{m} \\ \widehat{b} \end{bmatrix} = \begin{bmatrix} m_{11} & m_{12} & \dots & m_{1n} \\ m_{21} & m_{22} & \dots & m_{2n} \end{bmatrix} * \begin{bmatrix} y_1 \\ y_2 \\ \vdots \\ y_n \end{bmatrix} = M * \begin{bmatrix} y_1 \\ y_2 \\ \vdots \\ y_n \end{bmatrix}.$$

Die Matrix M wird als Pseudoinverse bezeichnet und berechnet sich aus den Messwerten $X_i$ und dem Vorwissen über das Messrauschen. Neben den Messwerten liefert das Verfahren auch Aussagen über die Genauigkeit der erhaltenen Schätzwerte, wenn die Störungen dem modellierten Messrauschen entsprechen. Umgekehrt können nicht modellierte Fehler oder Ausreißer die Schätzwerte völlig unbrauchbar machen. Ist die Anzahl der Messungen größer als eigentlich zur Ermittlung der Schätzparameter notwendig, was bei zusätzlichen Beleuchtungslinien der Fall ist, so gibt es auch für solche Fälle Lösungsansätze.

Da der Parameterraum zweidimensional, der Messraum aber n-dimensional mit n>2 ist, kann man einen Raum der Dimension n-2 konstruieren, der orthogonal zum Parameterraum ist und als Plausibilitätsraum verstanden werden kann. Dazu werden zu den beiden Zeilenvektoren der Pseudoinversen M beispielsweise mit dem Gram-Schmidt-Verfahren n-2 orthogonale Messvektoren erzeugt, und die ursprüngliche Pseudoinverse M wird entsprechend ergänzt. Die erweitere Schätzgleichung sieht dann folgendermaßen aus:

$$\begin{bmatrix} \widehat{m} \\ \widehat{b} \\ p_1 \\ \vdots \\ p_{n-2} \end{bmatrix} = \begin{bmatrix} m_{11} & m_{12} & \dots & m_{1n} \\ m_{21} & m_{22} & \dots & m_{2n} \\ m_{31} & m_{32} & \dots & m_{3n} \\ \vdots & \vdots & \ddots & \vdots \\ m_{n1} & m_{n2} & \dots & m_{nn} \end{bmatrix} * \begin{bmatrix} y_1 \\ y_2 \\ \vdots \\ y_n \end{bmatrix} = M_e * \begin{bmatrix} y_1 \\ y_2 \\ \vdots \\ y_n \end{bmatrix}.$$

Damit werden folglich n-2 Plausibilitätsparameter $p_1..p_{n-2}$ gewonnen. Im Fall einer Messung ohne Ausreißer liegen alle Plausibilitätsparameter in einem Intervall um 0. Abweichungen können numerisch zu einem Qualitätssignal aufbereitet werden. Wenn n > 3 ist, kann aus den Plausibilitätsparametern der fehlerhafte Messwert isoliert und damit korrigiert werden.

Bei drei Beleuchtungslinien 16a-c und zwei Kanteneigenschaften ist die Pseudoinverse nur um eine Zeile ergänzt. In diesem speziellen Fall entspricht die ergänzte Zeile genau der zweiten Ableitung, die ja bei einer Geraden Null ist.

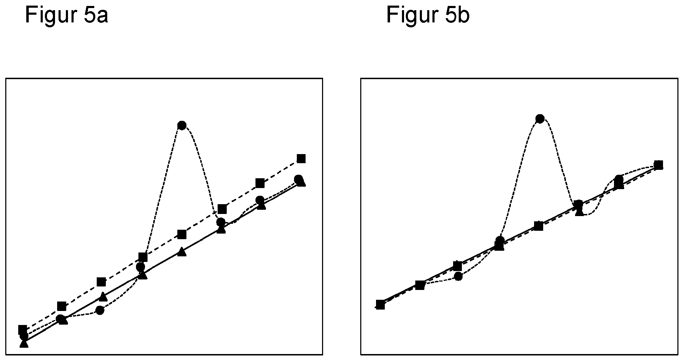

Figur 5a-b illustriert den erzielbaren Effekt rein beispielhaft für acht Beleuchtungslinien oder Messpunkte. Dabei liegt zur Veranschaulichung der fünfte Messpunkt durch einen nicht modellierten Fehler deutlich abseits der Geraden. Die übrigen Messpunkte sind nur durch Messrauschen gestört. Die eigentliche Kante ist durch eine durchgezogene und die geschätzte Kante durch eine gestrichelte Linie gezeigt, während die Messpunkte durch eine gepunktete Kurve verbunden sind.

Figur 5a ist das Ergebnis einer reinen Least-Square-Schätzung, wo die rekonstruierte Gerade durch den Ausreißer deutlich neben der tatsächlichen Gerade liegt. In Figur 5b dagegen wurde die beschriebene Kompensation durch Plausibilitätsparameter durchgeführt, Dadurch wird der fehlerhafte Messwert erkannt und eliminiert. Der Schätzfehler wird um eine ganze Größenordnung kleiner.

Wie schon erwähnt, kann der Sensor 10 sowohl mit bewegten Objekten 38, insbesondere auf einem Förderer 36, als auch mit ruhenden Objekten 38 umgehen. Für bewegte Objekte 38 eignet sich eine ereignisbasierte oder getriggerte Betriebsart. Dabei werden Bildaufnahme und Auswertung gezielt ausgelöst, wenn ein Objekt 38 im Überwachungsbereich 18 erwartet wird. Beispielsweise ist der Auslöser eine stromaufwärts angeordnete Lichtschranke mit Verzögerung entsprechend der erwarteten Dauer für den Fördervorschub bis zu dem Sensor 10 oder eine sonstige externe Quelle. Der Sensor 10 kann sich auch selbst triggern. Dazu wird beispielsweise einfach ein kleiner Bereich des Lichtempfängers 24 auf Veränderungen überwacht, der somit als einfacher Lichttaster fungiert. Sofern im Sensor 10 für eine sehr konstante Latenzzeit zwischen Auslöser und Bildaufnahme gesorgt ist, lassen sich Kanteneigenschaften auch für bewegte Objekte 38 mit der notwendigen Wiederholbarkeit ermitteln.

Für ruhende Objekte 38 ist eher eine zyklische Betriebsart geeignet. Bildaufnahme und Auswertung werden mit der maximalen Frequenz des Lichtempfängers 24 oder einer verlangsamten Frequenz abgearbeitet. Der Sensor 10 liefert nach jedem Zyklus die Kanteneigenschaften und das Schaltsignal. Da bei bewegten Objekten 38 unbekannt ist, zu welchem Zeitpunkt des Verarbeitungszyklus' sie im Überwachungsbereich 18 erfasst werden, variiert zumindest die detektierte Position in Bewegungsrichtung stark, deshalb ist dafür die getriggerte Betriebsart besser geeignet. Denkbar ist auch ein automatischer Übergang von der getriggerten Betriebsart in die zyklische Betriebsart. Dann soll zwar mit der Auswertung erst begonnen werden, wenn sich ein Objekt 38 im Überwachungsbereich 18 befindet, danach aber der Zustand des Objekts 38 innerhalb des Überwachungsbereichs 18 kontinuierlich ausgewertet werden (etwa bei "Smooth Stop").

**Patentansprüche**

1. Optoelektronischer Sensor (10) zur Erfassung eines Objekts (38) in einem Überwachungsbereich (18), wobei der Sensor (10) einen Lichtsender (12) zum Erzeugen mehrerer Beleuchtungslinien (16a-c) in dem Überwachungsbereich (18), einen Lichtempfänger (24) zum Aufnehmen von Bilddaten der Beleuchtungslinien (16a-c) sowie eine Steuer- und Auswertungseinheit (26) aufweist, um aus den Bilddaten mindestens eine Kanteneigenschaft einer Kante (42) des Objekts (38) zu bestimmen,
   **dadurch gekennzeichnet,**
   **dass** die Steuer- und Auswertungseinheit (26) dafür ausgebildet ist, die Kanteneigenschaft mit einer eingelernten Referenzkanteneigenschaft zu vergleichen und bei Übereinstimmung innerhalb eines Toleranzrahmens ein binäres Objektfeststellungssignal zu erzeugen, wobei der Sensor (10) ferner einen Schaltausgang (28) zur Ausgabe des Objektfeststellungssignals aufweist.

2. Sensor (10) nach Anspruch 1,
   wobei der Lichtsender (12) zum Erzeugen von zwei oder drei Beleuchtungslinien (16a-c) ausgebildet ist, die insbesondere parallel zueinander verlaufen.

3. Sensor (10) nach Anspruch 1 oder 2,
   wobei die Steuer- und Auswertungseinheit (26) dafür ausgebildet ist, die Bilddaten mit einem Triangulationsverfahren auszuwerten.

4. Sensor (10) nach einem der vorhergehenden Ansprüche,
   der ein erstes Bedienelement (32) zum Auslösen eines Einlernmodus' aufweist, wobei die Steuer- und Auswertungseinheit (26) dafür ausgebildet ist, in dem Einlernmodus die Referenzkanteneigenschaften des dann im Überwachungsbereich (18) befindlichen Objekts (38) anhand der Bilddaten der Beleuchtungslinien einzulernen.

5. Sensor (10) nach einem der vorhergehenden Ansprüche,
   der ein zweites Bedienelement (34) zum Einstellen des Toleranzrahmens aufweist.

6. Sensor (10) nach einem der vorhergehenden Ansprüche,
   wobei die Kanteneigenschaft einen Verlauf der Kante (42) in Höhenrichtung und/oder lateraler Richtung aufweist.

7. Sensor (10) nach einem der vorhergehenden Ansprüche,
   wobei die Kanteneigenschaft einen Höhensprung und/oder ein Kriterium zur Beurteilung der Krümmung der Kante (42) aufweist.

8. Sensor (10) nach einem der vorhergehenden Ansprüche,
   wobei der Lichtsender (12) mehr Beleuchtungslinien (16a-c) erzeugt als zur Rekonstruktion der Kanteneigenschaft erforderlich sind, und wobei die Steuer- und Auswertungseinheit (26) die mindestens eine zusätzliche Beleuchtungslinie (16a-c) für eine fehlertolerante Rekonstruktion nutzt.

9. Sensor (10) nach einem der vorhergehenden Ansprüche,
   wobei die Kanteneigenschaft eine Position und/oder Orientierung der Kante (42) aufweist.

10. Sensor (10) nach einem der vorhergehenden Ansprüche,
    wobei der Sensor (10) an einem Förderer (36) montiert ist, der das Objekt (38) in einer Bewegungsrichtung (40) an dem Sensor (10) vorbeibewegt, und wobei die Kanteneigenschaft eine Position der Kante (42) in Bewegungsrichtung (40) und/oder einen Winkel der Kante (42) zu der Bewegungsrichtung (40) aufweist.

11. Sensor (10) nach einem der vorhergehenden Ansprüche,
    wobei die Steuer- und Auswertungseinheit (26) dafür ausgebildet ist, den Vergleich der Kanteneigenschaft mit der Referenzeigenschaft auf einen Auslöser hin vorzunehmen.

12. Sensor (10) nach einem der vorhergehenden Ansprüche,
    wobei dem Lichtsender (12) ein Mustererzeugungselement (14) vorgeordnet ist.

**13.** Sensor (10) nach einem der vorhergehenden Ansprüche,
der eine Schnittstelle (30) zur Ausgabe der Kanteneigenschaft aufweist.

**14.** Sensor (10) nach einem der vorhergehenden Ansprüche,
der eine Schnittstelle (30) zur Ausgabe von Bilddaten aufweist.

**15.** Verfahren zur Erfassung eines Objekts (38) in einem Überwachungsbereich (18), bei dem mehrere Beleuchtungslinien (16a-c) in dem Überwachungsbereich (18) erzeugt und Bilddaten der Beleuchtungslinien (16a-c) aufgenommen und ausgewertet werden, um aus den Bilddaten mindestens eine Kanteneigenschaft einer Kante (42) des
Objekts (36) zu bestimmen,
**dadurch gekennzeichnet,**
**dass** die Kanteneigenschaft mit einer eingelernten Referenzkanteneigenschaft verglichen und bei Übereinstimmung
innerhalb eines Toleranzrahmens ein binäres Objektfeststellungssignal erzeugt und an einem Schaltausgang (28)
ausgegeben wird.

Figur 1

Figur 2

Figur 3

16a

16b

16c

Figur 4a

Figur 4b

(m,b)

b

$(m_{teach}, b_{teach})$

m

(m,b)

b

$(m_{teach}, b_{teach})$

m

Figur 5a

Figur 5b

**Europäisches Patentamt**
**European Patent Office**
**Office européen des brevets**

# EUROPÄISCHER RECHERCHENBERICHT

Nummer der Anmeldung

EP 20 17 9926

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| Y | DE 10 2010 022273 A1 (SICK AG [DE]) 1. Dezember 2011 (2011-12-01) * Absatz [0001] - Absatz [0009] * * Absatz [0022] * * Absatz [0036] * * Absatz [0050] * * Absatz [0075] * * Abbildung 1a * ----- | 1-15 | INV. G06K9/00 G06K9/50 G06K9/62 |
| Y | US 2007/297665 A1 (SEGEV AVNER [IL]) 27. Dezember 2007 (2007-12-27) * Absatz [0022] - Absatz [0023] * * Absatz [0063] * * Absatz [0075] - Absatz [0076] * * Abbildungen 8(a)-(b) * ----- | 1-15 | |
| Y | DE 10 2014 105746 A1 (SICK AG [DE]) 11. Juni 2015 (2015-06-11) * Absatz [0027] * * Absatz [0034] * ----- | 4,5 | |
| Y | DE 199 60 653 A1 (BAUMER ELECTRIC AG FRAUENFELD [CH]) 21. Juni 2000 (2000-06-21) * Absatz [0026] * * Abbildung 1d * ----- | 8 | RECHERCHIERTE SACHGEBIETE (IPC) G06K |

Der vorliegende Recherchenbericht wurde für alle Patentansprüche erstellt

| Recherchenort | Abschlußdatum der Recherche | Prüfer |
|---|---|---|
| Den Haag | 17. November 2020 | De Coi, Juri |

EPO FORM 1503 03.82 (P04C03)

**ANHANG ZUM EUROPÄISCHEN RECHERCHENBERICHT**
**ÜBER DIE EUROPÄISCHE PATENTANMELDUNG NR.**

EP 20 17 9926

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

17-11-2020

| Im Recherchenbericht angeführtes Patentdokument | Datum der Veröffentlichung | Mitglied(er) der Patentfamilie | Datum der Veröffentlichung |
|---|---|---|---|
| DE 102010022273 A1 | 01-12-2011 | DE 102010022273 A1<br>EP 2390620 A1<br>US 2011290989 A1 | 01-12-2011<br>30-11-2011<br>01-12-2011 |
| US 2007297665 A1 | 27-12-2007 | DE 112005002690 T5<br>US 2007297665 A1<br>WO 2006048857 A1 | 27-09-2007<br>27-12-2007<br>11-05-2006 |
| DE 102014105746 A1 | 11-06-2015 | DE 102014105746 A1<br>EP 2881762 A2 | 11-06-2015<br>10-06-2015 |
| DE 19960653 A1 | 21-06-2000 | CH 693468 A5<br>DE 19960653 A1<br>US 6323954 B1 | 15-08-2003<br>21-06-2000<br>27-11-2001 |

EPO FORM P0461

Für nähere Einzelheiten zu diesem Anhang : siehe Amtsblatt des Europäischen Patentamts, Nr.12/82